(19) Europäisches Patentamt
European Patent Office
Office européen des brevets

(11) **EP 2 730 947 A1**

(12) **EUROPÄISCHE PATENTANMELDUNG**

(43) Veröffentlichungstag:
**14.05.2014  Patentblatt 2014/20**

(51) Int Cl.:
*G01S 17/95* [(2006.01)]    *G01S 17/58* [(2006.01)]

(21) Anmeldenummer: **12192232.2**

(22) Anmeldetag: **12.11.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
• **Technische Universität Hamburg-Harburg 21073 Hamburg (DE)**
• **TuTech Innovation GmbH 21079 Hamburg (DE)**

(72) Erfinder:
• **Brinkmeyer, Ernst 21244 Buchholz (DE)**
• **Waterholter, Thomas 25462 Rellingen (DE)**

(74) Vertreter: **UEXKÜLL & STOLBERG Patentanwälte Beselerstrasse 4 22607 Hamburg (DE)**

(54) **Lidar-Messsystem und Lidar-Messverfahren**

(57)     Die vorliegende Erfindung betrifft ein Lidar-Messsystem zur Detektion der Anwesenheit und/oder Bewegung von Partikeln und/oder Objekten in einem von dem Lidar-Messsystem entfernten Raumbereich mit einer Interferometeranordnung sowie ein entsprechendes Verfahren unter Verwendung eines solchen Messsystems. Die Interferometeranordnung weist eine Dauerstrich-Laserquelle (2), eine Photodetektoranordnung (7) und optische Komponenten auf, die angepasst sind, um von der Dauerstrich-Laserquelle (2) ausgesandtes Licht (23) aufzuteilen, entlang eines einen Messzweig (4) bildenden ersten optischen Weges und eines von diesem getrennten und einen Referenzzweig (5) bildenden zweiten optischen Weges zu leiten und schließlich räumlich kohärent überlagert auf die Photodetektoranordnung (7) auftreffen zu lassen. Der Referenzzweig (5) hat eine vorbestimmte optische Weglänge, und der Messzweig (4) weist einen Messabschnitt (16) auf, in dem das Licht vom Messsystem weg in Richtung auf einen von diesem entfernten Raumbereich gerichtet ist und diesen durchläuft und von in dem Raumbereich befindlichen Partikeln in Richtung auf das Messsystem rückgestreutes Licht wieder am Messsystem empfangen wird. Ferner ist eine Auswerteeinheit (9) vorgesehen, die mit der Photodetektoranordnung (7) gekoppelt und angepasst ist, um deren Detektorsignal zu empfangen und aus dem Detektorsignal die Anwesenheit und/oder Bewegung von Partikeln in dem entfernten Raumbereich zu bestimmen. Die Dauerstrich-Laserquelle (2) hat eine Kohärenzlänge in dem Bereich von 0,1 bis 100 m.

Fig. 1

EP 2 730 947 A1

**Beschreibung**

Die vorliegende Erfindung betrifft ein Lidar-Messsystem zur Detektion der Anwesenheit und/oder Bewegung von Partikeln und/oder Objekten in einem von dem Lidar-Messsystem entfernten Raumbereich und ein Verfahren zur Detektion der Anwesenheit und/oder Bewegung von Partikeln und/oder Objekten in einem entfernten Raumbereich mit Hilfe eines derartigen Lidar-Messsystems.

Lidar (Light detection and ranging) ist ein dem Radar eng verwandtes Verfahren, das statt der im Fall des Radar eingesetzten Funkwellen Laserlicht einsetzt. Mit ihm kann eine Fernmessung verschiedener Atmosphärenparameter und insbesondere aus der Ferne eine Bestimmung der Anwesenheit, des Abstands und der Geschwindigkeit von in der Luft oder einer anderen Atmosphäre befindlichen Partikeln und anderen Objekten vorgenommen werden. Grundsätzlich können alle Partikel, die das verwendete Licht streuen, und alle Objekte vermessen werden, die eine reflektierende Störstelle im Raum oder einen Streukörper darstellen.

Lidar trägt somit dem in verschiedenen Bereichen der Technik bestehenden Bedarf Rechnung, physikalische Parameter an von der eigentlichen Messvorrichtung entfernten Orten ortsaufgelöst, drahtlos und nicht-invasiv als Funktion der Zeit zu bestimmen. Beispielsweise ist es mit Hilfe von Lidar möglich, über die Vermessung durch Wind bewegter Partikel die an einem von der Messvorrichtung entfernten Ort herrschende Windgeschwindigkeit zu ermitteln. Dies kann zum Beispiel ausgenutzt werden, um in einfacher Weise in einigen hundert Metern Entfernung vor einer Windkraftanlage die Windgeschwindigkeit zu messen und auf Basis der gemessenen Windgeschwindigkeit regeltechnische Parameter der Windkraftanlage so anzupassen, dass ein möglichst optimaler Wirkungsgrad erzielt und dabei gleichzeitig die Belastung der Windkraftanlage durch den Wind möglichst gering gehalten wird, und bei extremen Windböen ggf. rechtzeitig Notfallmaßnahmen, wie etwa eine Notabschaltung, zu ergreifen, um eine Beschädigung der Windkraftanlage zu verhindern.

Bekannte Lidar-Systeme zur Bestimmung von Windgeschwindigkeiten beruhen auf der Detektion der durch die Streuung von Laserlicht an mit dem Wind mitbewegten Partikeln bewirkten Doppler-Frequenzverschiebung des Streulichts (vgl. z.B. C. Weitkamp, Lidar - Range-resolved optical remote sensing of the atmosphere, Springer 2005). Daher kann jeweils nur die Windgeschwindigkeit in der Sichtlinie des verwendeten Laserstrahls ermittelt werden.

Die Doppler-Frequenzverschiebung wird in den meisten Fällen interferometrisch durch Überlagerung des an einer Messvorrichtung empfangenen Streulichts mit direktem Licht der verwendeten Laserquelle bestimmt. Zu diesem Zweck werden im Stand der Technik hochkohärente Laserquellen mit Kohärenzlängen von mehreren hundert Metern verwendet, die optischen Quellenbandbreiten im Sub-MHz-Bereich entsprechen. Im Stand der Technik sind zur Erzielung von Ortsauflösung grundsätzlich zwei unterschiedliche Vorgehensweisen bekannt.

Gemäß der einen Vorgehensweise werden Dauerstrich-Laserquellen eingesetzt, deren Strahl mit Hilfe eines geeigneten optischen Systems, wie einer Linse oder eines Teleskops, auf die jeweils gewünschte Zielentfernung fokussiert wird (vgl. z.B. WO 2005/114253 A1). Bei geeigneter Fokussierung stammt dann prinzipiell der größte Teil des empfangenen Streulichtes aus dem fokusnahen Bereich, so dass durch Verschiebung des Fokusbereichs unterschiedliche Teilabschnitte eines interessierenden Raumbereichs in unterschiedlichen Entfernungen untersucht werden können.

Allerdings besteht dabei das grundsätzliche Problem, dass die effektive Fokuslänge in etwa quadratisch mit dem Abstand von dem zur Fokussierung verwendeten optischen System zunimmt, so dass für große Abstände nur noch eine schlechte Ortsauflösung erreichbar ist. Ferner wird jeweils auch Streulicht von Partikeln außerhalb des Fokusbereichs empfangen. Wenn derartige Partikel einen größeren Streuquerschnitt als die Partikel im Fokusbereich haben oder in sehr viel größerer Konzentration als die Partikel im Fokusbereich vorliegen, kann ihr Streulicht doch den größten Teil des empfangenen Streulichtes bilden und das Signal aus dem Fokusbereich überdecken. Ohne aufwändige Maßnahmen würde die gemessene Windgeschwindigkeit dann einem falschen Ort zugeordnet. Ein Beispiel ist eine ggf. deutlich hinter dem Zielbereich, d.h. dem Fokusbereich, befindliche dichte Wolkendecke. Schließlich ist es von Nachteil, dass die Änderung der Fokussierung, die im Allgemeinen mechanisch erfolgt, zusätzlichen apparativen Aufwand erfordert und eine erhebliche Zeit in Anspruch nimmt.

Gemäß der anderen Vorgehensweise werden gepulste Laserquellen eingesetzt, wobei die Ortsbestimmung über eine Laufzeitmessung der Laserpulse erfolgt. Auf diese Weise können mit einem Puls, dessen Pulsbreite die Ortsauflösung bestimmt, die für Pulse mit einer Breite von 200 ns beispielsweise 30 m beträgt, nacheinander mehrere Auflösungselemente zwischen z.B. 0 und 300 m Abstand von dem Messsystem abgefragt werden. Diese Auflösungselemente sind jeweilige Teilabschnitte des interessierenden Raumbereichs, der von den Laserpulsen durchlaufen wird.

Allerdings ergeben sich regelmäßig aufgrund der jeweils nur für kurze Zeit erfolgenden Beleuchtung jedes Auflösungselements durch den Puls schlechte Signal-Rausch-Verhältnisse, und die Frequenzauflösung und damit auch die Windgeschwindigkeitsauflösung ist aufgrund der kurzen Pulsbreiten begrenzt. Außerdem müssen in der Regel relativ aufwändige Lasersysteme mit einem Masteroszillator und einem Leistungsverstärker verwendet werden.

Es ist Aufgabe der vorliegenden Erfindung, ein einfach aufgebautes Lidar-Messsystem und ein einfach durchzuführendes Lidar-Messverfahren bereitzustellen, mit denen die Anwesenheit und/oder Bewegung von Partikeln in einem ausgedehnten entfernten Raumbereich schnell, flexibel und mit hoher Ortsauflösung bestimmt werden kann und die obigen Nachteile vermieden werden.

Diese Aufgabe wird durch ein Lidar-Messsystem mit den Merkmalen des Anspruchs 1 und durch ein Verfahren mit den Merkmalen des Anspruchs 11 gelöst. Vorteilhafte Ausgestaltungen des Lidar-Messsystems und des Verfahrens sind Gegenstand der jeweils zugehörigen Unteransprüche.

Nach der vorliegenden Erfindung ist vorgesehen, dass ein Lidar-Messsystem zur Detektion der Anwesenheit und/oder Bewegung von Partikeln und/oder Objekten in einem von dem Lidar-Messsystem entfernten Raumbereich eine Interferometeranordnung mit einer Dauerstrich-Laserquelle, einer Photodetektoranordnung, verschiedenen optischen Komponenten zur Leitung von Licht der Dauerstrich-Laserquelle entlang vorbestimmter optischer Wege und einer Auswerteeinheit aufweist.

Die Photodetektoranordnung ist angepasst, um ein Detektorsignal auszugeben, das für auf sie auftreffendes Licht charakteristisch ist, das der Dauerstrich-Laserquelle entstammt. Sie kann eine oder mehrere Photodetektoren aufweisen.

Die optischen Komponenten sind so angepasst und angeordnet, dass von der Dauerstrich-Laserquelle im Betrieb ausgesandtes Licht zunächst aufgeteilt wird, anschließend entlang eines einen Mess- bzw. Signalzweig der Interferometeranordnung bildenden ersten optischen Weges und eines von diesem getrennten und einen Referenzzweig der Interferometeranordnung bildenden zweiten optischen Weges geleitet wird und schließlich nach Durchlaufen des Messzweiges und des Referenzzweiges räumlich kohärent überlagert auf die Photodetektoranordnung auftrifft. Die Interferometeranordnung weist somit den Aufbau eines Mach-Zehnder-Interferometers auf. Dabei hat der Referenzzweig eine vorbestimmte optische Weglänge, und der Messzweig weist einen Messabschnitt auf, in dem das Licht von dem Messsystem weg in Richtung auf einen von diesem entfernten Raumbereich gerichtet ist und diesen zumindest teilweise durchläuft und von in dem Messabschnitt befindlichen Partikeln oder Objekten in Richtung auf das Messsystem rückgestreutes bzw. reflektiertes Licht wieder am Messsystem empfangen wird.

Mit anderen Worten wird ein Teil des optischen Weges des Messzweiges, nämlich der Messabschnitt, durch den Bereich der Umgebung des Messsystems gebildet, aus dem überhaupt Photonen, die von dem Messsystem in Richtung auf den entfernten Raumbereich verlaufen, bis sie an einem Partikel gestreut oder einem Objekt reflektiert werden, wieder zum Messsystem zurückkehren und dort in den Rest des Messzweiges eingekoppelt werden. Dies erfordert, dass zum einen am Beginn des Messabschnitts das den Messzweig durchlaufende Laserlicht mit Hilfe einer geeigneten Einrichtung in Richtung auf den entfernten Raumbereich abgestrahlt wird und dass zum anderen am Ende des Messabschnitts ein Teil des gestreuten Lichtes mit einer geeigneten Empfangseinrichtung empfangen und anschließend entlang des Restes des Messzweiges geleitet wird. Die optische Weglänge des Messzweiges wird somit für jedes Photon durch den Abstand der Partikel bzw. Objekte vom Messsystem bestimmt, von denen das zur Photodetektoranordnung gelangende gestreute oder reflektierte Licht stammt.

Aus den obigen Erläuterungen ist zu entnehmen, dass der entfernte Raumbereich einen Teil des Messabschnitts bildet und im Extremfall mit dem Messabschnitt identisch sein kann. Der Messabschnitt umfasst den Bereich der Umgebung des Messsystems, aus dem überhaupt von Partikeln rückgestreutes oder von Objekten reflektiertes Licht in den Rest des Messzweiges eingekoppelt wird. Demgegenüber ist der entfernte Raumbereich der für die Detektion interessierende Bereich, der kleiner oder maximal gleich dem Messabschnitt gewählt werden kann.

Die Auswerteeinheit ist mit der Photodetektoranordnung gekoppelt und angepasst, um deren Detektorsignal zu empfangen und auf Basis des Detektorsignals die Anwesenheit und/oder Bewegung von Partikeln und/oder Objekten in dem entfernten Raumbereich zu bestimmen. Letzteres kann beispielsweise insbesondere in derselben Weise geschehen, wie es aus dem Stand der Technik bekannt ist. Insbesondere kann die Bewegung und die dabei die Geschwindigkeit in bekannter Weise über die Ermittlung der Dopplerverschiebung des detektierten Lichtes erfolgen.

Die Dauerstrich-Laserquelle ist so ausgestaltet, dass sie eine Kohärenzlänge in dem Bereich von 0,1 bis 100 m aufweist, bevorzugt in dem Bereich von 1 bis 100 m, mehr bevorzugt in dem Bereich von 1 bis 50 m. Da kohärente Interferenz an der Photodetektoranordnung nur für Streulicht von Partikeln bzw. reflektiertes Licht von Objekten möglich ist, für die die optische Weglänge des Messzweiges innerhalb der Kohärenzlänge mit der optischen Weglänge des Referenzzweiges übereinstimmt, wird durch die stark begrenzte Kohärenzlänge eine hohe und durch geeignete Wahl der Kohärenzlänge wählbare Ortsauflösung erreicht. Zur Detektoranordnung gelangendes Streulicht bzw. reflektiertes Licht von außerhalb dieses Kohärenzbereichs befindlichen Partikeln bzw. Objekten führt demgegenüber lediglich zu einem breitbandigen Untergrund im Detektorsignal, der zu einer mäßigen Verringerung des Signal-Rausch-Verhältnisses führen kann, die Ortsauflösung aber nicht beeinträchtigt. Wenn der Kohärenzbereich kleiner als die Ausdehnung des entfernten Raumbereichs entlang dem Laserstrahl ist, wird somit lediglich ein Teilabschnitt des entfernten Raumbereichs vermessen, so dass durch Verschiebung des Kohärenzbereichs - beispielsweise mit Hilfe einer optional vorhandenen Einrichtung zur Änderung der optischen Weglänge des Referenzzweiges, bevorzugt aber rechnerisch auf die weiter unten ausführlich dargelegte Weise - eine durch dessen Ausdehnung bestimmte Ortsauflösung erreicht werden kann. Die Ortsauflösung ist in vorteilhafter Weise unabhängig von der Entfernung des jeweils untersuchten Teilabschnitts, der auch als Auflösungselement bezeichnet werden kann.

In einer bevorzugten Ausführungsform weist die Dauerstrich-Laserquelle eine Laserlicht-Erzeugungskomponente, einen dieser nachgeschalteten optischen Phasenmodulator und eine Steuereinrichtung zur Steuerung des optischen Phasenmodulators auf. Der optische Phasenmodulator ist angepasst, um das von der Laserlicht-Erzeugungskomponente abgestrahlte Laserlicht zu empfangen und in seiner Phase zu modulieren. Er weist einen Steuersignaleingang auf und ist ferner angepasst, um die Phasenmodulation auf Basis einer Phasenfunktion vorzunehmen, die durch ein am Steuersignaleingang empfangenes Steuersignal definiert wird. Die Steuereinrichtung ist mit dem Steuersignaleingang verbunden und angepasst, um an den Steuersignaleingang ein Steuersignal zu liefern, das einem durch eine vorbestimmte Phasenfunktion $\theta(t)$ definierten Rauschsignal bzw. Pseudo-Rauschsignal entspricht, wobei das Steuersignal bewirkt, dass der optische Phasenmodulator die Phasenmodulation mit der vorbestimmten Phasenfunktion $\theta(t)$ vornimmt. Das optische Leistungsdichtespektrum des von der Dauerstrich-Laserquelle abgestrahlten Laserlichts erhält auf diese Weise eine durch die Phasenfunktion $\theta(t)$ bestimmte Form, die z.B. gaußförmig oder lorentzförmig sein kann, und Bandbreite. Die Dauerstrich-Laserquelle kann somit als eine synthetische Laserquelle bezeichnet werden, für die im Unterschied zu natürlichen Laserquellen die Phasenfunktion bekannt ist, die zur einer spektralen Verbreiterung und Verformung des monochromatischen Laserlichtes führt. Die Bandbreite bestimmt dabei in üblicher Weise die Kohärenzlänge. Auf diese Weise kann in vorteilhafter Weise dieselbe Laserlicht-Erzeugungskomponente zur Realisierung verschiedener Kohärenzlängen und damit Ortsauflösungen Verwendung finden. Die Laserlicht-Erzeugungskomponente, die insbesondere eine schmalbandige und bevorzugt einmodige Dauerstrich-Laserdiode sein kann, hat bevorzugt eine Bandbreite von 100 kHz oder weniger und mehr bevorzugt von 10 kHz oder weniger.

In dieser Ausführungsform ist es insbesondere bevorzugt, wenn die vorbestimmte Phasenfunktion $\theta(t)$ einstellbar ist. Eine solche Einstellbarkeit stellt die Möglichkeit der Einstellbarkeit der spektralen Form und/oder der Bandbreite des von der Dauerstrich-Laserquelle abgestrahlten Laserlichts bereit. Für jede gewünschte spektrale Form und/oder Bandbreite kann beispielsweise durch ein iteratives numerisches Verfahren eine entsprechende Phasenfunktion $\theta(t)$ aufgefunden werden.

Im Rahmen eines solchen iterativen Verfahrens wird beispielsweise von einer zufällig gewählten Phasenfunktion, d.h. einem zufälligen Phasenverlauf, oder einer gezielt gewählten Phasenfunktion ausgegangen und rechnerisch die spektrale Form und Bandbreite des von dem mit dieser Phasenfunktion angesteuerten optischen Phasenmodulator ausgegebenen Laserlichts bestimmt und mit der gewünschten spektralen Form und Bandbreite verglichen. Auf Basis des Vergleichs wird die Phasenfunktion modifiziert, und es werden die obigen Schritte wiederholt. Das Verfahren wird so lange fortgesetzt, bis das gewünschte Ergebnis mit hinreichender Genauigkeit erreicht wird. Insbesondere kann ein solches iteratives Verfahren durchgeführt werden, indem von einem Spektrum mit gaußförmigem Betrag und zufälliger Phase ausgegangen wird. Daraus wird die Phase der zugehörigen elektrischen Feldstärke durch inverse Fouriertransformation berechnet und deren Amplitude konstant gesetzt. Aus der so gewonnenen elektrischen Feldstärke wird durch Fouriertransformation das zugehörige Spektrum berechnet und mit dessen Phase der Iterationsprozess von vorne begonnen. Der Prozess wird so lange fortgesetzt, bis das gewünschte Ergebnis, z.B. ein vorgegebenes gaußförmiges Amplituden- und Leistungsdichtespektrum, mit hinreichender Genauigkeit erreicht wird. Unabhängig von der genauen Ausgestaltung ist zu beachten, dass die für ein iteratives Verfahren aufzuwendende Rechenzeit insoweit irrelevant ist, als eine einmal aufgefundene Phasenfunktion dauerhaft Verwendung finden kann.

Diese Ausgestaltung hat den großen Vorteil, dass die Ortsauflösung geändert werden kann, ohne hardwaremäßige Veränderungen oder eine mechanische Bewegung von Komponenten vornehmen zu müssen. Es ist lediglich erforderlich, eine andere geeignete Phasenfunktion $\theta(t)$ an der Steuereinrichtung zu wählen bzw. einzustellen. Im Unterschied zu bekannten Dauerstrich-Lidar-Systemen, bei denen - wie oben erwähnt - die Ortsauflösung durch die insbesondere bei großen Entfernungen begrenzte Fokussierbarkeit eines Laserstrahls stark eingeschränkt ist, kann die Ortsauflösung einfach, flexibel und schnell mit hoher Reproduzierbarkeit in einem weiten Bereich frei gewählt werden. Gleichzeitig werden in der bereits beschriebenen Weise zuverlässig etwaige Störeinflüsse von Streuung an Partikeln bzw. Reflektion an Objekten außerhalb des durch die Kohärenzlänge und die optische Weglänge des Referenzzweiges bestimmten Teilabschnitts des entfernten Raumbereichs, wie etwa von Partikeln in vor- oder nachgelagerten Wolken, unterdrückt, und somit wird die Gefahr einer Fehlzuordnung von gemessenen Geschwindigkeitswerten zu Orten stark verringert.

In den beschriebenen Ausführungsformen, bei denen ein optischer Phasenmodulator vorgesehen ist, ist es ferner bevorzugt, wenn die Auswerteeinheit angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, die in der Weise gewählt ist, dass das Ergebnis der Funktion dem Detektorsignal entspricht, dass sich bei Wahl eines Referenzzweiges ergeben würde, der gegenüber dem tatsächlichen

Referenzzweig eine um $\Delta t_{Verschiebung}$ geänderte Laufzeit und damit auch eine entsprechend geänderte optische Weglänge aufweist.

Diese Ausgestaltung beruht auf der Erkenntnis, dass das Detektorsignal nicht nur die für die Auswertung benötigten Informationen über Partikel und Objekte in dem der tatsächlichen optischen Weglänge des Referenzzweiges und der Kohärenzlänge entsprechenden Teilabschnitt des entfernten Raumbereichs enthält, sondern auch jeweils bereits die Informationen über Partikel und Objekte in anderen Teilabschnitten des entfernten Raumbereichs in anderen Abständen vom Messsystem. Für die Auswertung des gesamten entfernten Raumbereichs oder eines größeren Teilabschnitts von diesem ist die Kenntnis der zur Ansteuerung des optischen Phasenmodulators und zur entsprechenden Erzeugung des von der Dauerstrich-Laserquelle abgestrahlten Lichtes verwendeten Phasenfunktion θ(t) erforderlich. Diese ist für eine natürliche Laserquelle nicht bekannt und müsste aufwändig bestimmt werden. Bei der hier verwendeten Dauerstrich-Laserquelle werden dagegen die Phaseneigenschaften des Laserstrahls synthetisch erzeugt, sind nur pseudo-zufällig und liegen in Form der Phasenfunktion θ(t) zahlenmäßig vor. Diese Phasenfunktion θ(t) findet sich in bestimmter Weise in der komplexen Amplitude des Detektorsignals wieder, die auf Grundlage der Kenntnis der Phasenfunktion θ(t) gezielt numerisch verändert werden kann, um dadurch für die Zwecke der Auswertung eine von der tatsächlichen optischen Weglänge abweichende optische Weglänge des Referenzzweiges vorzutäuschen.

Somit kann in vorteilhafter Weise ohne hardwaremäßige Änderungen und ohne mechanische Bewegung von Komponenten nachträglich der Teilabschnitt des entfernten Raumbereichs, aus dem Licht stammt, das sich in der beschriebenen Weise kohärent mit dem Licht des Referenzzweiges überlagert und zur Detektion verwendet wird, d.h. die Lage des Auflösungselements ohne erneute Messung verschoben werden. Anders als bei bekannten Dauerstrich-Lidar-Verfahren können durch eine einzige Messung Informationen aus einem großen Bereich und nicht nur aus dem Fokusbereich gewonnen werden, und die Ortsauflösung kann gezielt und entfernungsunabhängig gewählt werden. Es ist auf diese Weise sehr einfach und flexibel möglich, eine ortsaufgelöste Messung an verschiedenen Teilabschnitten des entfernten Raumbereichs mit einstellbarer Ortsauflösung vorzunehmen und somit aus der Ferne bestimmte Eigenschaften der verschiedenen Teilabschnitte zu bestimmen.

Wenn in Zusammenhang mit der Auswertung und dem entsprechenden Kohärenzbereich von optischer Weglänge die Rede ist, ist vor diesem Hintergrund daher diese "vorgetäuschte" optische Weglänge gemeint.

Es ist bei dieser "numerischen Verschiebung" des Teilabschnittes von Vorteil, wenn die Funktion die Multiplikation des Detektorsignals mit dem Faktor

$$e^{-i\left[\theta\left(t+\Delta t_{Verschiebung}\right)-\theta(t)\right]}$$

umfasst. Es kann gezeigt werden, dass das komplexe Detektorsignal - ggf. neben zeitlich konstanten Anteilen - einen zeitlich variablen Anteil enthält, der proportional zu

$$e^{i\left[\theta\left(t+t_d\right)-\theta(t)\right]}$$

ist, wobei $t_d$ der durch die Entfernung der Streupartikel bestimmte Laufzeitunterschied zwischen Referenzzweig und Messzweig ist. Die Multiplikation mit obigem Faktor führt daher zu einem zeitlich variablen Anteil, der proportional zu

$$e^{i\left[\theta\left(t+t_d\right)-\theta\left(t+\Delta t_{Verschiebung}\right)\right]}$$

ist und somit einer durch $\Delta t_{Verschiebung}$ bestimmten abweichenden optischen Weglänge des Referenzzweigs entspricht.

In einer bevorzugten Ausgestaltung umfassen die optischen Komponenten einen Strahlteiler, wie zum Beispiel insbesondere einen faseroptischen Koppler, zur Aufteilung des von der Dauerstrich-Laserquelle abgestrahlten Lichtes, optische Fasern, die zumindest einen Teil des Referenzzweiges definieren, und/oder optische Fasern, die einen Teil des Messzweiges definieren, einen optischen Frequenzverschieber, z.B. gebildet durch einen akustooptischen Modulator, im Messzweig und/oder im Referenzzweig, einen optischen Verstärker, z.B. einen Erbium-Faser-Verstärker, im Messzweig oder vor der Aufteilung in Mess- und Referenzzweig, einen einstellbaren Polarisationssteller im Referenzzweig und/oder im Messzweig und/oder einen Strahlvereiniger, insbesondere einen faseroptischen Koppler, zur Vereinigung des entlang des Messzweiges und entlang des Referenzzweiges geführten Lichtes am Ende des Messzweiges und des Referenzzweiges.

In einer bevorzugten Ausgestaltung umfassen die optischen Komponenten eine Abstrahl- und Empfangseinrichtung, die den Beginn und das Ende des Messabschnitts des Messzweiges definiert und angepasst ist, um das Licht von dem Messsystem weg in Richtung auf den Raumbereich abzustrahlen und rückgestreutes Licht wieder zu empfangen, so dass dieses entlang des Restes des Messzweiges geführt wird. Die Abstrahl- und Empfangseinrichtung kann einen Empfänger aufweisen, der räumlich von einer Abstrahleinrichtung getrennt ist (d.h. ein bistatisches System), oder eine Komponente, die an einem Ort sowohl zur Abstrahlung als auch zum Empfang von Laserlicht angepasst ist (d.h. ein monostatisches System). Die kombinierte Abstrahl- und Empfangseinrichtung kann insbesondere einen optischen Zirkulator und/oder ein Linsensystem aufweisen.

In einer bevorzugten Ausführungsform ist die Interferometeranordnung in Form eines Mach-Zehnder-Interferometers mit zwei für einen balancierten Empfang angeordneten und ausgestalteten Photodetektoren aufgebaut, wobei das Detektorsignal eine Differenz der Ausgangssignale der beiden Photodetektoren ist. Auf diese Weise können in an sich bekannter Weise Störungen aus dem Detektorsignal entfernt werden.

In einer bevorzugten Ausführungsform weist das Lidar-Messsystem ferner eine Polarisationsstrahlteileranordnung bzw. ein oder mehrere polarisationsteilende Elemente auf, das bzw. die angeordnet und angepasst ist bzw. sind, um im Betrieb Licht der Dauerstrich-Laserquelle, das entlang des Messzweiges geführt wird, und Licht der Dauerstrich-Laserquelle, das entlang des Referenzzweiges geführt wird, jeweils in Licht zweier orthogonaler Polarisationsrichtungen aufzuteilen.

Außerdem ist die Photodetektoranordnung in dieser Ausführungsform angeordnet und angepasst, um nach Durchlaufen des Messzweiges und des Referenzzweiges das räumlich kohärent überlagerte Licht für die beiden Polarisationsrichtungen separat zu detektieren. Das Detektorsignal umfasst dann zwei Teildetektorsignale, von denen jedes für Licht einer der beiden Polarisationsrichtungen charakteristisch ist. Die Photodetektoranordnung kann beispielsweise zwei separate, räumlich getrennte Photodetektoren aufweisen, und die Polarisationsstrahlteileranordnung kann so angeordnet und ausgestaltet sein, dass das Licht der beiden Polarisationsrichtungen jeweils nur auf einen anderen der beiden Photodetektoren auftrifft.

Durch die obige Anordnung werden die Überlagerungssignale von Messzweig und Referenzzweig nach Polarisationsrichtung getrennt in genau derselben Weise ermittelt, wie es oben unabhängig von der Polarisationsrichtung beschrieben worden ist. Aufgrund der separaten Betrachtung der beiden Polarisationsrichtungen kann jedoch durch die Auswerteeinheit festgestellt werden, ob bei der Streuung oder Reflektion der Polarisationszustand erhalten geblieben ist, was in der Regel überwiegend der Fall ist, oder ob eine Verlagerung in den orthogonalen Polarisationszustand bewirkt worden ist. Ist letzteres der Fall, dann kann man in bekannter Weise Aussagen über Art und Form der Streu- oder Reflexionskörper machen. Die Auswerteeinheit ist dementsprechend angepasst, um auf Basis der beiden Teildetektorsignalen Änderungen des Polarisationszustandes durch die detektierten Partikel und/oder Objekte zu bestimmen und ggf. Informationen über Art und/oder Form der detektierten Partikel und/oder Objekte zu liefern.

In einer bevorzugten Ausführungsform eines Lidar-Messsystem, in dem die Auswerteeinheit angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, ist die Laserlicht-Erzeugungskomponente angepasst, um gleichzeitig oder abwechselnd Laserlicht zweier Wellenlängen abzustrahlen. Da der optische Phasenmodulator auf beide Wellenlängen einwirkt, umfasst das von der Dauerstrich-Laserquelle abgestrahlte Laserlicht zwei Wellenlängenbereiche in der Umgebung der beiden Wellenlängen, in denen das optische Leistungsdichtespektrum jeweils eine durch die Phasenfunktion $\theta(t)$ bestimmte Form und Bandbreite hat.

Außerdem ist die Photodetektoranordnung in dieser Ausführungsform im Falle gleichzeitiger Emission beider Wellenlängen durch die Laser-Erzeigungskomponente so angeordnet und angepasst, um nach Durchlaufen des Messzweiges und des Referenzzweiges das räumlich kohärent überlagerte Licht für die beiden Wellenlängenbereiche separat zu detektieren. Das Detektorsignal umfasst dann zwei Teildetektorsignale, von denen jedes für Licht eines der beiden Wellenlängenbereiche charakteristisch ist. Bei zeitlich getrennter Abstrahlung der beiden Wellenlängen entsprechen die während der entsprechenden Zeitabschnitte gelieferten Detektorsignale den beiden Teildetektorsignalen.

Durch die obige Anordnung werden die Überlagerungssignale von Messzweig und Referenzzweig nach den beiden Wellenlängenbereichen getrennt in genau derselben Weise ermittelt, wie es oben unabhängig vom Wellenlängenbereich beschrieben worden ist. Wenn sich neben streuenden Partikeln und/oder reflektierenden Objekten Gas zwischen diesen und dem Messsystem befindet und dieses Gas das Licht des einen Wellenlängenbereichs absorbiert, das Licht des anderen Wellenlängenbereichs dagegen nicht oder sehr viel weniger, kann aufgrund der separaten Betrachtung der beiden Wellenlängenbereiche jedoch durch die Auswerteeinheit die absorbierende Gasmenge festgestellt werden. Wird nun die Auswertung in der beschriebenen Weise für eine Vielzahl unterschiedlicher Zeitverschiebungswerte $\Delta t_{Verschiebung}$ vorgenommen, die jeweils einem anderen Teilabschnitt des entfernten Raumbereichs entsprechen, kann ferner ortsaufgelöst die Konzentration des Gases in den verschiedenen Teilabschnitten ermittelt werden. Dieses Verfahren ist mit Ausnahme der erfindungsgemäßen Art und Weise der Erzielung von Ortsauflösung an sich bekannt und wird als DIAL-Verfahren (differential absorption Lidar) bezeichnet.

Die Auswerteeinheit ist dementsprechend angepasst, um die Auswertung auf Basis einer Funktion der beiden Teildetektorsignale, der vorbestimmten Phasenfunktion und einer Vielzahl unterschiedlicher Zeitverschiebungswerte $\Delta t_{Verschiebung}$ vorzunehmen, die jeweils einem anderen Teilabschnitt des entfernten Raumbereichs entsprechen, und ortsaufgelöst die Konzentration mindestens eines Gases zu bestimmen, das für die beiden Wellenlängenbereiche unterschiedliche Absorptionskoeffizienten aufweist. Da die Messung darauf beruht, dass das Laserlicht bei der Streuung nicht wesentlich durch thermische Bewegung der Streukörper spektral verbreitert wird, ist es zwingend erforderlich, dass zusätzlich zu dem zu vermessenden Gas geeignete Partikel und/oder Objekte in dem entfernten Raumbereich vorhanden sind.

Das oben beschriebene Messsystem kann in vorteilhafter Weise zur Durchführung eines Verfahrens zur Detektion der Anwesenheit und/oder Bewegung von Partikeln und/oder Objekten in einem entfernten Raumbereich verwendet werden. Dazu wird der Messzweig in der Weise angeordnet, d.h. insbesondere der Messabschnitt so angeordnet, dass der entfernte Raumbereich Teil des Messabschnitts ist oder im Extremfall den Messabschnitt bildet. Dabei wird die Dauerstrich-Laserquelle betrieben, um Laserlicht in der beschriebenen Weise gleichzeitig entlang des Messzweiges und entlang des Referenzzweiges zu leiten. Die Anwesenheit und/oder Bewegung von Partikeln und/oder Objekten in dem entfernten Raumbereich wird dann mit Hilfe der Auswerteeinheit in der ebenfalls bereits beschriebenen Weise ermittelt.

In einer vorteilhaften Ausgestaltung des Verfahrens, in der ein Lidar-Messsystem mit einer einen optischen Phasenmodulator enthaltenden Dauerstrich-Laserquelle zum Einsatz kommt, wird die Form und/oder die Bandbreite des optischen Leistungsdichtespektrums des von der Dauerstrich-Laserquelle abgestrahlten Laserlichts eingestellt, indem die vorbestimmte Phasenfunktion $\theta(t)$ an der Steuereinrichtung entsprechend eingestellt wird. Auf diese Weise kann die Ortsauflösung gezielt an die jeweiligen Anforderungen angepasst werden.

In einer vorteilhaften Ausgestaltung des Verfahrens, in der ein Lidar-Messsystem zum Einsatz kommt, das eine einen optischen Phasenmodulator enthaltenden Dauerstrich-Laserquelle und eine Auswerteeinheit enthält, die angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, wird an der Auswerteeinheit das Zeitintervall $\Delta t_{Verschiebung}$ verändert, um die Entfernung eines Teilabschnitts des Raumbereichs von dem Lidar-Messsystem zu verändern, wobei der Teilabschnitt die Partikel enthält, deren rückgestreutes Licht bei der kohärenten Überlagerung des entlang des Messzweiges geführten Lichtes und des entlang des Referenzzweiges geführten Lichtes zur Interferenz beiträgt.

In einer vorteilhaften Ausgestaltung des Verfahrens, in der eines der oben beschriebene Lidar-Messsysteme zum Einsatz kommt, das Licht zweier unterschiedlicher Polarisationsrichtungen detektiert, werden mit Hilfe der Auswerteeinheit auf Basis der beiden Teildetektorsignalen Änderungen des Polarisationszustandes durch die detektierten Partikel und/oder Objekte bestimmt und daraus Information über die Art und/oder Form der Partikel und/oder Objekte gewonnen.

In einer vorteilhaften Ausgestaltung des Verfahrens, in der eines der oben beschriebene Lidar-Messsysteme zum Einsatz kommt, das Licht zweier unterschiedlicher Wellenlängenbereiche detektiert, wird mit Hilfe der Auswerteeinheit auf Basis einer Funktion der beiden Teildetektorsignale, der vorbestimmten Phasenfunktion und einer Vielzahl unterschiedlicher Zeitverschiebungswerte $\Delta t_{Verschiebung}$, die jeweils einem anderen Teilabschnitt des entfernten Raumbereichs entsprechen, ortsaufgelöst die Konzentration mindestens eines Gases bestimmt, das für die beiden Wellenlängenbereiche unterschiedliche Absorptionskoeffizienten aufweist.

Die Erfindung wird im Folgenden anhand eines Ausführungsbeispiels unter Bezugnahme auf die beigefügten Zeichnungen näher erläutert, in denen

Figur 1 eine schematische Darstellung eines Lidar-Messsystems gemäß eines Ausführungsbeispiels der Erfindung zeigt und

Figur 2 eine schematische Darstellung einer Dauerstrich-Laserlichtquelle gemäß eines Ausführungsbeispiels der Erfindung zeigt.

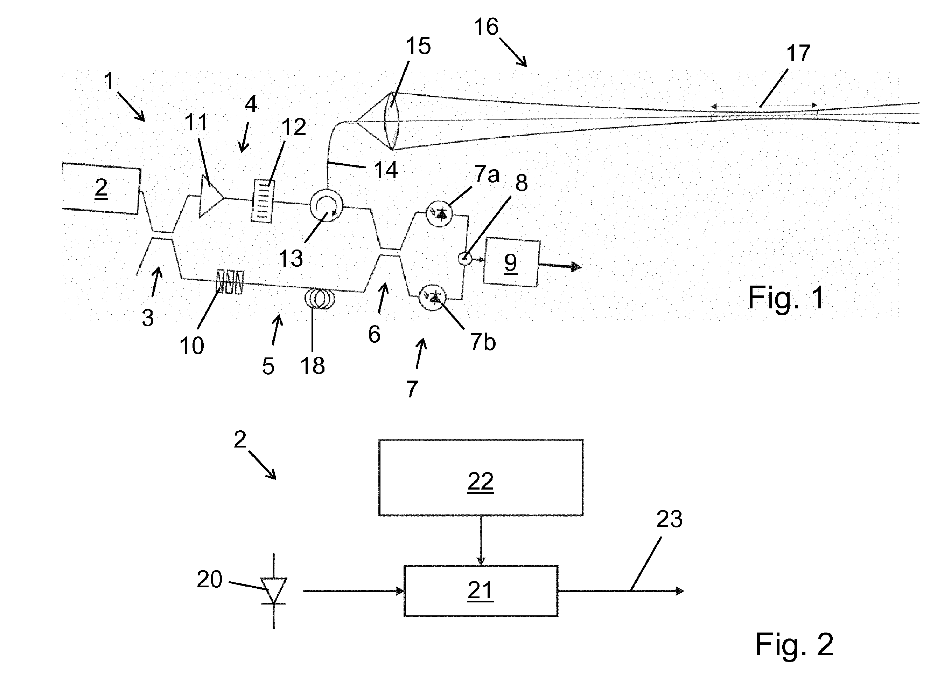

Das in Figur 1 schematisch gezeigte Lidar-Messsystem 1 weist eine Dauerstrich-Laserquelle 2 mit einer Ausgangsleistung von z.B. 1 mW und einer Wellenlänge von z.B. 1530 nm auf, deren Licht durch einen Strahlteiler 3 in Form eines faseroptischen Kopplers auf einen teilweise faseroptisch definierten Messzweig 4 und einen vollständig faseroptisch definierten Referenzzweig 5 aufgeteilt wird. Die verwendeten optischen Fasern sind bevorzugt Monomodefasern mit niedriger Dämpfung und einem Feldradius von z.B. 5 $\mu$m. Am Ende von Messzweig 4 und Referenzzweig 5 ist ein weiterer faseroptischer Koppler 6 zur Vereinigung des Lichtes von Messzweig 4 und Referenzzweig 5 angeordnet. Wie in einer bekannten Mach-Zehnder-Interferometeranordnung wird das Licht dabei räumlich kohärent überlagert, und verschiedene Anteile des kohärent überlagerten Lichtes werden auf die beiden Photodetektoren 7a, 7b der Photodetektoranordnung 7 gelenkt, die beispielsweise InGaAs-Detektoren sein können und deren für das auf sie auftreffende Licht charakteristischen Detektorsignale in einem Subtraktionselement 8 zur Elminierung von Störungen voneinander subtrahiert werden. Das Differenzsignal wird schließlich einer Auswerteeinheit 9 zugeführt, in der das Differenzsignal zur Detektion der Anwesenheit und/oder Bewegung von Partikeln und/oder Objekten ausgewertet wird.

Der Referenzzweig 5 weist einen einstellbaren faseroptischen Polarisationssteller 10 auf und eine Umwegstrecke, beispielsweise in Form eines aufgewickelten Abschnitts 18 der Faser. Der Messzweig 4 weist nacheinander einen Erbium-Faser-Verstärker 11 mit einer Ausgangsleistung von z.B. 1 W, einen akustooptischen Modulator 12 mit einer Frequenz von z.B. 80 MHz und einen optischen Zirkulator 13 auf.

Mit Hilfe des Zirkulators 13 wird Licht über einen Faserabschnitt 14 einer Sende/Empfangslinse 15 einer Brennweite von z.B. 250 mm zugeleitet und in den das Messsystem 1 umgebenden Bereich fokussiert. Trifft das Licht in diesem Bereich in der Weise auf rückstreuende Partikel, dass es wieder zu der Linse 15 gelangt, wird es wieder in den Faserabschnitt 14 und anschließend über den Zirkulator 13 in den Rest des Messabschnitts 4 eingekoppelt. Der Bereich, in dem überhaupt Licht durch Rückstreuung an Partikeln wieder zu der Linse 15 gelangen kann, stellt einen Messabschnitt 16 des Messzweiges 4 dar. Die Anwesenheit und/oder Bewegung von Partikeln und/oder Objekten kann in dem gesamten Messabschnitt 16 oder nur in einem Teil von diesem detektiert werden, der in der vorliegenden Anmeldung als entfernter Raumbereich bezeichnet wird. Der entfernte Raumbereich ist demnach der für eine bestimmte Messung interessierende Teil des Messabschnitts 16.

Die Dauerstrich-Laserquelle 2 weist eine Laserdiode 20 und einen nachgeschalteten optischen Phasenmodulator 21 auf, dessen Modulationsverhalten durch eine Steuereinrichtung 22 gesteuert wird, die die für die Modulation bestimmende und ein Pseudo-Rauschsignal definierende Phasenfunktion θ(t) vorgibt. Das von dem optischen Phasenmodulator 21 bzw. der Dauerstrich-Laserquelle 2 abgestrahlte Laserlicht 23 ist gegenüber dem Licht der Laserdiode 20 durch die Modulation als Funktion der Phasenfunktion θ(t) im optischen Leistungsdichtespektrum verbreitert und verformt.

Durch die oben beschriebene Berücksichtigung verschiedener Zeitverschiebungswerte $\Delta t_{Verschiebung}$ bei der Auswertung durch die Auswerteeinheit 9 kann rein rechnerisch ohne Veränderungen an dem beschriebenen Aufbau die Detektion ortsaufgelöst für verschiedene Teilabschnitte 17 in unterschiedlichen Abständen von der Linse 15 separat vorgenommen werden.

**Patentansprüche**

1. Lidar-Messsystem zur Detektion der Anwesenheit und/oder Bewegung von Partikeln und/oder Objekten in einem von dem Lidar-Messsystem entfernten Raumbereich mit einer Interferometeranordnung, die aufweist:

   eine Dauerstrich-Laserquelle (2),
   eine Photodetektoranordnung (7), die angepasst ist, um ein für auf sie auftreffendes Licht der Dauerstrich-Laserquelle (2) charakteristisches Detektorsignal auszugeben,
   optische Komponenten, die so angepasst und angeordnet sind, dass von der Dauerstrich-Laserquelle (2) ausgesandtes Licht (23)

   - zunächst aufgeteilt wird,
   - anschließend entlang eines einen Messzweig (4) der Interferometeranordnung bildenden ersten optischen Weges und eines von diesem getrennten und einen Referenzzweig (5) der Interferometeranordnung bildenden zweiten optischen Weges geleitet wird und
   - schließlich nach Durchlaufen des Messzweiges (4) und des Referenzzweiges (5) räumlich kohärent überlagert auf die Photodetektoranordnung (7) auftrifft,
   - wobei der Referenzzweig (5) eine vorbestimmte optische Weglänge hat und
   - der Messzweig (4) einen Messabschnitt (16) aufweist, in dem das Licht von dem Messsystem weg in Richtung auf einen von diesem entfernten Raumbereich gerichtet ist und diesen durchläuft und von in dem Raumbereich befindlichen Partikeln und Objekten in Richtung auf das Messsystem rückgestreutes bzw. reflektiertes Licht wieder am Messsystem empfangen wird, und

   eine Auswerteeinheit (9), die mit der Photodetektoranordnung (7) gekoppelt und angepasst ist, um deren Detektorsignal zu empfangen und aus dem Detektorsignal die Anwesenheit und/oder Bewegung von Partikeln in dem entfernten Raumbereich zu bestimmen, **dadurch gekennzeichnet, dass** die Dauerstrich-Laserquelle (2) eine Kohärenzlänge in dem Bereich von 0,1 bis 100 m aufweist.

2. Lidar-Messsystem nach Anspruch 1, bei dem die Dauerstrich-Laserquelle (2) eine Kohärenzlänge in dem Bereich von 1 bis 50 m aufweist.

3. Lidar-Messsystem nach Anspruch 1 oder Anspruch 2, bei dem die Dauerstrich-Laserquelle (2) aufweist:

   eine Laserlicht-Erzeugungskomponente (20), einen dieser nachgeschalteten optischen Phasenmodulator (21), der angepasst ist, um das von der Laserlicht-Erzeugungskomponente (20) abgestrahlte Laserlicht zu empfangen und in seiner Phase zu modulieren, wobei der optische Phasenmodulator (21) einen Steuersignaleingang aufweist und angepasst ist, um die Phasenmodulation auf Basis einer Phasenfunktion vorzunehmen, die durch ein am Steuersignaleingang empfangenes Steuersignal definiert wird, und eine Steuereinrichtung (22), die mit dem Steuersignaleingang des optischen Phasenmodulators (21) verbunden und angepasst ist, um an den Steuersignaleingang ein Steuersignal zu liefern, das einem durch eine vorbestimmte Phasenfunktion θ(t) definierten Pseudo-Rauschsignal entspricht, wobei das Steuersignal bewirkt, dass der optische Phasenmodulator (21) die Phasenmodulation mit der vorbestimmten Phasenfunktion θ(t) vornimmt, so dass das optische Leistungsdichtespektrum des von der Dauerstrich-Laserquelle (2) abgestrahlten Laserlichts (23) eine durch die Phasenfunktion θ(t) bestimmte Form und Bandbreite hat.

4. Lidar-Messsystem nach Anspruch 3, bei dem die vorbestimmte Phasenfunktion θ(t) einstellbar ist.

5. Lidar-Messsystem nach Anspruch 3 oder Anspruch 4, bei dem die Auswerteeinheit (9) angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, wobei die Funktion in der Weise gewählt ist, dass das Ergebnis der Funktion dem Detektorsignal bei einer gegenüber der tatsächlichen Laufzeit durch den Referenzzweig (5) um $\Delta t_{Verschiebung}$ geänderten Laufzeit durch den Referenzzweig (5) entspricht.

6. Lidar-Messsystem nach Anspruch 5, bei dem die Funktion die Multiplikation des Detektorsignals mit dem Faktor $\exp[-i(\theta(t+ \Delta t_{Verschiebung}) -\theta(t))]$ umfasst.

7. Lidar-Messsystem nach einem der vorhergehenden Ansprüche, bei dem die optischen Komponenten umfassen:

einen Strahlteiler (3) zur Aufteilung des von der Dauerstrich-Laserquelle (2) abgestrahlten Lichtes (23),
optische Fasern, die zumindest einen Teil des Referenzzweiges (5) definieren, und/oder optische Fasern, die einen Teil des Messzweiges (4) definieren,
einen optischen Frequenzverschieber, insbesondere einen akustooptischen Modulator, im Messzweig (4) oder im Referenzzweig (5),
einen optischen Verstärker (11), insbesondere einen Erbium-Faser-Verstärker, im Messzweig (4) oder vor der Aufteilung in Mess- (4) und Referenzzweig (5),
einen einstellbaren Polarisationssteller im Referenzzweig (5) oder Messzweig (4) und/oder einen Strahlvereiniger, insbesondere einen faseroptischen Koppler (6), zur Vereinigung des entlang des Messzweiges (4) und entlang des Referenzzweiges (5) geführten Lichtes am Ende des Messzweiges (4) und des Referenzzweiges (5).

8. Lidar-Messsystem nach einem der vorhergehenden Ansprüche, bei dem die optischen Komponenten eine Abstrahl- und Empfangseinrichtung aufweist, die den Beginn und das Ende des Messabschnitts (16) des Messzweiges (4) definiert und angepasst ist, um das Licht von dem Messsystem weg in Richtung auf den Raumbereich abzustrahlen und im Raumbereich rückgestreutes Licht wieder zu empfangen, so dass dieses entlang des Restes des Messzweiges (4) geführt wird.

9. Lidar-Messsystem nach einem der vorhergehenden Ansprüche,

- das ferner eine Polarisationsstrahlteileranordnung aufweist, die angeordnet und angepasst ist, um im Betrieb Licht (23) der Dauerstrich-Laserquelle (2), das entlang des Messzweiges (4) geführt wird, und Licht (23) der Dauerstrich-Laserquelle (2), das entlang des Referenzzweiges (5) geführt wird, jeweils in Licht zweier orthogonaler Polarisationsrichtungen aufzuteilen, und
- bei dem die Photodetektoranordnung (7) angeordnet und angepasst ist, um nach Durchlaufen des Messzweiges (4) und des Referenzzweiges (5) das räumlich kohärent überlagerte Licht für die beiden Polarisationsrichtungen separat zu detektieren, wobei das Detektorsignal zwei Teildetektorsignale umfasst, von denen jedes für Licht einer der beiden Polarisationsrichtungen charakteristisch ist,
- wobei die Auswerteeinheit (9) ferner angepasst ist, um auf Basis der beiden Teildetektorsignalen Änderungen des Polarisationszustandes durch die detektierten Partikel und/oder Objekte zu bestimmen.

10. Lidar-Messsystem nach Anspruch 5, nach Anspruch 6 oder nach einem der Ansprüche 7 bis 8, soweit er von Anspruch 5 oder Anspruch 6 abhängig ist, bei dem

- die Laserlicht-Erzeugungskomponente (20) angepasst ist, um Laserlicht zweier Wellenlängen abzustrahlen, so dass das von der Dauerstrich-Laserquelle (2) abgestrahlte Laserlicht zwei Wellenlängenbereiche in der Umgebung der beiden Wellenlängen umfasst, in denen das optische Leistungsdichtespektrum jeweils eine durch die Phasenfunktion θ(t) bestimmte Form und Bandbreite hat,
- die Photodetektoranordnung (7) angeordnet und angepasst ist, um nach Durchlaufen des Messzweiges (4) und des Referenzzweiges (5) das räumlich kohärent überlagerte Licht für die beiden Wellenlängenbereiche separat zu detektieren, wobei das Detektorsignal zwei Teildetektorsignale umfasst, von denen jedes für Licht eines der beiden Wellenlängenbereiche charakteristisch ist, und
- die Auswerteeinheit (9) ferner angepasst ist, um die Auswertung auf Basis einer Funktion der beiden Teildetektorsignale, der vorbestimmten Phasenfunktion und einer Vielzahl unterschied-

licher Zeitverschiebungswerte $\Delta t_{Verschiebung}$ vorzunehmen, die jeweils einem anderen Teilabschnitt (17) des entfernten Raumbereichs entsprechen, und ortsaufgelöst die Konzentration mindestens eines Gases zu bestimmen, das für die beiden Wellenlängenbereiche unterschiedliche Absorptionskoeffizienten aufweist.

11. Verfahren zur Detektion der Anwesenheit und/oder Bewegung von Partikeln in einem entfernten Raumbereich mit Hilfe eines Lidar-Messsystems nach einem der vorhergehenden Ansprüche, mit den Schritten:

Anordnen des Messzweiges (4) in der Weise, dass der entfernte Raumbereich Teil des Messabschnitts (16) ist, Betreiben der Dauerstrich-Laserquelle (2), um Laserlicht gleichzeitig entlang des Messzweiges (4) und entlang des Referenzzweiges (5) zu leiten, und Bestimmen der Anwesenheit und/oder Bewegung von Partikeln in dem entfernten Raumbereich mit Hilfe der Auswerteeinheit (9).

12. Verfahren nach Anspruch 11, bei dem das Lidar-Messsystem nach Anspruch 3 oder einem der Ansprüche 4 bis 10, soweit er von Anspruch 3 abhängig ist, ausgestaltet ist und das ferner den Schritt aufweist, die Form und/oder die Bandbreite des optischen Leistungsdichtespektrums des von der Dauerstrich-Laserquelle (2) abgestrahlten Laserlichts (23) einzustellen, indem die vorbestimmte Phasenfunktion $\theta(t)$ an der Steuereinrichtung (22) entsprechend eingestellt wird.

13. Verfahren nach Anspruch 11 oder Anspruch 12, bei dem das Lidar-Messsystem nach Anspruch 5 oder Anspruch 6 ausgestaltet ist und das ferner den Schritt aufweist, an der Auswerteeinheit (9) das Zeitintervall $\Delta t_{Verschiebung}$ zu verändern, um die Entfernung eines Teilabschnitts (17) des Raumbereichs von dem Lidar-Messsystem zu verändern, wobei der Teilabschnitt (17) die Partikel enthält, deren rückgestreutes Licht bei der kohärenten Überlagerung des entlang des Messzweiges (4) geführten Lichtes und des entlang des Referenzzweiges (5) geführten Lichtes zur Interferenz beiträgt.

14. Verfahren nach einem der Ansprüche 11 bis 13, bei dem das Lidar-Messsystem nach Anspruch 9 oder Anspruch 10 ausgestaltet ist, und bei dem mit Hilfe der Auswerteeinheit (9) auf Basis der beiden Teildetektorsignalen Änderungen des Polarisationszustandes durch die detektierten Partikel und/oder Objekte bestimmt und daraus Information über die Art und/oder Form der Partikel und/oder Objekte gewonnen werden.

15. Verfahren nach einem der Ansprüche 11 bis 14, bei dem das Lidar-Messsystem nach Anspruch 10 ausgestaltet ist, und bei dem mit Hilfe der Auswerteeinheit (9) auf Basis einer Funktion der beiden Teildetektorsignale, der vorbestimmten Phasenfunktion und einer Vielzahl unterschiedlicher Zeitverschiebungswerte $\Delta t_{Verschiebung}$, die jeweils einem anderen Teilabschnitt (17) des entfernten Raumbereichs entsprechen, ortsaufgelöst die Konzentration mindestens eines Gases bestimmt wird, das für die beiden Wellenlängenbereiche unterschiedliche Absorptionskoeffizienten aufweist.

Fig. 1

Fig. 2

EP 2 730 947 A1

Europäisches
Patentamt

European
Patent Office

Office européen
des brevets

**EUROPÄISCHER RECHERCHENBERICHT**

Nummer der Anmeldung

EP 12 19 2232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Shuang Gao: "Complex-optical-field lidar system for range and vector velocity measurement", OPTICS EXPRESS, 1. November 2012 (2012-11-01), XP055058815, Gefunden im Internet: URL:http://www.opticsinfobase.org/DirectPDFAccess/49B4A532-A83A-9804-84C82977F983D5F2_244858/oe-20-23-25867.pdf?da=1&id=244858&seq=0&mobile=no [gefunden am 2013-04-09] | 1,2,7-9, 11,14,15 | INV. G01S17/95 G01S17/58 |
| A | * das ganze Dokument * | 3-6,10, 12,13 | |
| | ----- | | |
| A | AALDERS M C ET AL: "Measurement of the axial point spread function in scattering media using single-mode fiber-based optical coherence tomography", IEEE JOURNAL OF SELECTED TOPICS IN QUANTUM ELECTRONICS, IEEE SERVICE CENTER, PISCATAWAY, NJ, US, Bd. 9, Nr. 2, 1. März 2003 (2003-03-01), Seiten 227-233, XP011102889, ISSN: 1077-260X, DOI: 10.1109/JSTQE.2003.813299 * das ganze Dokument * | 1-15 | |
| | ----- | | |
| | -/-- | | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 12. April 2013 | Damp, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 12 19 2232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Mohammad Umar Piracha: "Range resolved lidar for long distance ranging with sub-millimeter resolution", OPTICS EXPRESS, 24. März 2010 (2010-03-24), XP055058812, Gefunden im Internet: URL:http://dx.doi.org/10.1364/OE.18.007184 http://www.opticsinfobase.org/view_article .cfm?gotourl=http%3A%2F%2Fwww.opticsinfoba se.org%2FDirectPDFAccess%2FE93E55D5-FAF7-6 221-C4E0068595D9690F_196814%2Foe-18-7-7184 .pdf%3Fda%3D1%26id%3D196814%26seq%3D0%26mo bile%3Dno&org= [gefunden am 2013-04-09] * das ganze Dokument * ----- | 1-15 | |
| A | BUETTNER L ET AL: "A multimode-fibre laser-Doppler anemometer for highly spatially resolved velocity measurements using low-coherence light; A multimode-fibre LDA", MEASUREMENT SCIENCE AND TECHNOLOGY, IOP, BRISTOL, GB, Bd. 12, Nr. 11, 1. November 2001 (2001-11-01), Seiten 1891-1903, XP020063358, ISSN: 0957-0233, DOI: 10.1088/0957-0233/12/11/319 * das ganze Dokument * ----- | 1-15 | RECHERCHIERTE SACHGEBIETE (IPC) |
| A | US 2004/019282 A1 (MULLEN LINDA J [US] ET AL) 29. Januar 2004 (2004-01-29) * das ganze Dokument * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 12. April 2013 | Damp, Stephan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes
Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 12 19 2232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LI Y ET AL: "ULTRAWIDEBAND COHERENT NOISE LIDAR RANGE-DOPPLER IMAGING AND SIGNAL PROCESSING BY USE OF SPATIAL-SPECTRAL HOLOGRAPHY IN INHOMOGENEOUSLY BROADENED ABSORBERS", APPLIED OPTICS, OPTICAL SOCIETY OF AMERICA, WASHINGTON, DC; US, Bd. 45, Nr. 25, 1. September 2006 (2006-09-01), Seiten 6409-6420, XP001249789, ISSN: 0003-6935, DOI: 10.1364/AO.45.006409 * das ganze Dokument * ----- | 1-15 | |
| A | US 2007/046945 A1 (SCHWIESOW RONALD L [US] SCHWIESOW RONALD LEE [US]) 1. März 2007 (2007-03-01) * Absätze [0032] - [0034] * ----- | 1-15 | |
| A | ZACHARY COLE RANDY R REIBEL DARYN E BENSON KRISTIAN D MERKEL W RANDALL BABBITT KELVIN WAGNER: "Coherent Lidar Range Processing of Broadband Optical Noise Waveforms", QUANTUM ELECTRONICS AND LASER SCIENCE, 2005 CONFERENCE BALTIMORE, MD, USA 22-27 MAY 2005, PISCATAWAY, NJ, USA,IEEE, Bd. 3, 22. Mai 2005 (2005-05-22), Seiten 1994-1996, XP010887903, ISBN: 978-1-55752-796-7 * das ganze Dokument * ----- -/-- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 12. April 2013 | Damp, Stephan |

Europäisches Patentamt
European Patent Office
Office européen des brevets

**EUROPÄISCHER RECHERCHENBERICHT**

Nummer der Anmeldung

EP 12 19 2232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | Ernst Brinkmeyer: "Continuous wave synthetic low-coherence wind sensing Lidar: motionless measurement system with subsequent numerical range scanning", OPTICS EXPRESS, 17. Januar 2013 (2013-01-17), XP055058805, Gefunden im Internet: URL:http://www.opticsinfobase.org/view_article.cfm?gotourl=http%3A%2F%2Fwww.opticsinfobase.org%2FDirectPDFAccess%2FE949EC17-DC2C-3D79-C684193D6FCEBFE3_248578%2Foe-21-2-1872.pdf%3Fda%3D1%26id%3D248578%26seq%3D0%26mobile%3Dno&org= [gefunden am 2013-04-09] * das ganze Dokument * ----- | 1-15 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 12. April 2013 | Damp, Stephan |

EPO FORM 1503 03.82 (P04C03)

**EP 2 730 947 A1**

**ANHANG ZUM EUROPÄISCHEN RECHERCHENBERICHT
ÜBER DIE EUROPÄISCHE PATENTANMELDUNG NR.**

EP 12 19 2232

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2013

| Im Recherchenbericht angeführtes Patentdokument | Datum der Veröffentlichung | Mitglied(er) der Patentfamilie | Datum der Veröffentlichung |
|---|---|---|---|
| US 2004019282 A1 | 29-01-2004 | KEINE | |
| US 2007046945 A1 | 01-03-2007 | KEINE | |

EPO FORM P0461

Für nähere Einzelheiten zu diesem Anhang : siehe Amtsblatt des Europäischen Patentamts, Nr.12/82

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005114253 A1

**In der Beschreibung aufgeführte Nicht-Patentliteratur**

- **C. WEITKAMP.** Lidar - Range-resolved optical remote sensing of the atmosphere. Springer, 2005